# DEMANDE DE BREVET EUROPEEN

(11) **EP 1 694 008 A2**
(43) Date de publication de la demande: **23.08.2006**
(21) Numéro de dépôt: 06100650.8
(22) Date de dépôt: 20.01.2006
(51) Int. Cl.: H04L 12/56

(54) **Routeur à mise à jour synchronisée de tables de routage, pour un réseau de communication à routage distribué**

(30) Priorité: 07.02.2005 FR 0550349
(71) Demandeur: ALCATEL, 75008 Paris (FR)
(72) Inventeur: Randriamasy, Claire-Sabine, 91190 Meudon (FR); Rombeaut, Jean-Pierre, 59600 Maubeuge (FR); Moore, Thomas, 92110 Clichy (FR)
(74) Mandataire: Sciaux, Edmond

(57) **Abrégé**

Un routeur (R), pour un réseau à routage distribué, comprend i) une base de données (BD1-BD3), contenant des données représentatives des états des liens entre routeurs du réseau, ii) des moyens de calcul (MC) pour déterminer des routes à partir de ces données et mettre à jour des tables de routage distribué en fonction de ces routes déterminées, et iii) des moyens de gestion (MG) chargés, en cas de réception ou d'émission locale d'un LSA ou TE-LSA à un instant TAL(R), de déterminer le temps écoulé depuis la réception ou l'émission de la dernière instance du LSA ou TE-LSA reçu afin de le comparer à un seuil choisi, et soit d'attendre l'expiration d'une temporisation de calcul en cours, si l'on est en présence d'un TE-LSA régulier, soit de déclencher une temporisation de stabilisation, d'une durée choisie et dont l'instant de départ TAL(R) sert à recaler la date d'expiration de la temporisation de calcul en cours à un instant choisi, si l'on est en présence d'un LSA ou d'un TE-LSA sporadique, afin d'ordonner aux moyens de calcul (MC), après expiration de la durée de temporisation de calcul, de déterminer de nouvelles routes à partir des dernières instances de LSA ou TE-LSA reçues ayant été émises avant un instant précédent la date d'expiration de la temporisation de calcul en cours d'une durée au moins égale à un seuil de synchronisation, puis de mettre à jour les tables de routage associées après expiration d'une temporisation de rafraîchissement.

## Description

L'invention concerne les réseaux de communication à routage distribué, et plus précisément les routeurs équipant de tels réseaux.

On entend ici par « routeur» un équipement (ou noeud) de routage distribué agencé de manière à échanger, avec les autres routeurs du réseau auquel il appartient, des annonces d'état de lien comportant des données représentatives de la disponibilité d'un lien (on parle alors de LSA (« Link State Advertisement »)) ou des données représentatives de l'occupation d'un lien, comme par exemple la bande passante utilisée ou disponible (on parle alors de TE-LSA (« Traffic Engineering - LSA »)).

Dans les réseaux à routage distribué, il est important que les décisions de routage prises par les routeurs soient cohérentes afin d'éviter la déviation de trafic et/ou la formation de boucles de routage. Pour ce faire, les différents routeurs d'un réseau à routage distribué doivent comporter des bases de données de routage contenant des données, représentatives des états des liens inter-routeurs, sensiblement identiques, de manière à disposer d'une même vue de l'état du réseau.

Cela est relativement facile lorsque le routage repose sur des métriques de type statique ou quasi-statique, comme par exemple le nombre de sauts, qui sont dérivées des LSAs et sont des informations topologiques qui changent rarement. Mais, cela est nettement plus compliqué lorsque le routage repose sur des métriques de type dynamique, comme par exemple la bande passante (disponible, utilisée ou réservée) ou le taux de perte de paquets, qui sont typiquement dérivées des TE-LSAs et changent régulièrement. Cela requiert en effet que les bases de données de routage soient synchronisées et disposent des informations de routage les plus récentes.

Le protocole de routage distribué IS-IS (« Intermediate System - Intermediate System ») n'offre pas de mécanisme de synchronisation des bases de données avec acquittement (ou accusé de réception) y compris entre routeurs voisins. Il repose sur la supposition que lorsqu'un changement survient au niveau d'un lien inter-routeurs, il existe une forte probabilité que le changement d'état de lien correspondant se propage et soit mis à jour au voisinage du lien concerné au bout d'un certain temps. Par conséquent, en cas de modification de l'état d'un lien d'un routeur à protocole IS-IS, ce dernier doit attendre pendant un délai prédéterminé (appelé «Wdelay»), avant de recalculer les routes destinées à mettre à jour ses tables de routage.

Le protocole de routage distribué OSPF (« Open Shortest Path First Protocol ») garantit la synchronisation des bases de données des routeurs voisins grâce à un mécanisme appelé DEP (pour « Database Exchange Process »). Selon ce mécanisme DEP, des routeurs sont considérés comme voisins s'ils ont échangé leurs LSAs les plus récents. Plus précisément, les routeurs doivent tout d'abord s'échanger des paquets de description de base de données ou DDPs (pour « Database Description Packets »), qui comprennent chacun la liste des LSAs dont ils disposent et leurs dates de mise à jour. A réception d'un DDP le routeur compare les dates de mise à jour reçues à celles qui sont stockées dans sa base de données, en correspondance des données de routage des LSAs, de manière à déterminer celles qui doivent être mises à jour. Puis, le routeur transmet au routeur voisin, qui lui a communiqué le DDP, une requête d'état de lien (ou « Link State Request ») comportant la liste des LSAs qu'il souhaite mettre à jour. Enfin, lorsque le routeur requérant reçoit les LSAs requis, il met à jour sa base de données et transmet au routeur émetteur un accusé de réception (ou « Link State Acknowledgement ») qui met fin au mécanisme DEP.

Les modifications d'état de lien pouvant survenir à chaque instant et à n'importe quel endroit du réseau, et l'instant de synchronisation (des bases de données LSA des routeurs) par diffusion de proche en proche (ou « flooding ») étant imprévisible au sein d'un réseau, le mécanisme DEP ne peut pas garantir la synchronisation (de la base de données LSA) d'un routeur avec celles des routeurs du réseau qui ne sont pas ses voisins. Par conséquent, la synchronisation (des bases de données LSA des routeurs) au sein d'un réseau de grande dimension peut ne jamais être obtenue.

Afin d'améliorer la situation il a été proposé de retarder la mise à jour des bases de données au moyen d'un délai prédéterminé (appelé « spfDelay ») supposé permettre aux LSAs les plus récents de se propager, à l'instar de ce qui se fait avec le protocole de routage IS-IS. Dans ce cas, un routeur à protocole OSPF ne peut recalculer ses routes qu'à la triple condition qu'il ait reçu au moins une mise à jour de LSA, qu'un délai égal à spfDelay se soit écoulé depuis la réception de cette mise à jour de LSA et qu'il soit effectivement synchronisé avec ses voisins.

Mais, cette amélioration n'est adaptée qu'au routage reposant sur des LSAs relatifs à la topologie, qui ne changent et ne sont émis qu'irrégulièrement. Ces LSAs peuvent généralement être identifiés comme annonciateurs d'une cascade de LSAs susceptibles de parvenir dans le délai spfDelay.

Le protocole de routage distribué OSPF, comme le protocole de routage distribué IS-IS, ne permet donc pas de garantir que les LSAs utilisés par un routeur, pour mettre à jour ses tables de routage, sont les mêmes que ceux utilisés par les autres routeurs de son réseau, pour mettre à jour leurs tables de routage respectives.

Il a également été proposé dans le document brevet FR 2843263 un algorithme de routage multi-critères adaptatif appelé RMC (pour « Routing with Multiple Criteria »). Cet algorithme consiste à calculer les chemins optimaux (ou routes) selon une période prédéterminée (appelée « spfHoldDelay »), et à signaler les changements d'état de lien au moyen de LSAs spécifiques appelés TE-LSAs. Cependant, le champ « LS Age » qui est contenu dans chaque TE-LSA n'est que proportionnel au nombre de sauts qu'il a emprunté, si bien qu'il ne reflète pas précisément son instant d'émission. Par conséquent, l'algorithme ne permet pas de garantir que les TE-LSAs utilisés par un routeur, pour mettre à jour ses tables de routage, sont les mêmes que ceux utilisés par les autres routeurs de son réseau, pour mettre à jour leurs tables de routage respectives.

Aucun protocole de routage distribué n'étant entièrement satisfaisant, l'invention a donc pour but d'améliorer la situation.

Elle propose à cet effet un routeur, pour un réseau de communication à routage distribué, comprenant une base de données, contenant des données représentatives des états des liens entre routeurs du réseau, et des moyens de calcul capables de déterminer des routes à partir de ces données et de mettre à jour des tables de routage distribué en fonction de ces routes déterminées.

Ce routeur se caractérise par le fait qu'il comprend des moyens de gestion chargés, lorsqu'ils reçoivent ou émettent à un instant TAL(R) des données représentatives de l'état d'un lien :
- de déterminer le temps écoulé depuis la réception ou l'émission de la dernière instance des données représentatives de l'état de ce lien, puis
- de comparer ce temps écoulé à un seuil choisi, et
- soit d'attendre l'expiration d'une temporisation dite de calcul, en cours et de durée prédéfinie, si le temps écoulé est inférieur au seuil choisi et si les données représentatives de l'état du lien sont de type TE-LSA (cas d'un TE-LSA dit « régulier »), soit de déclencher une temporisation dite de stabilisation, d'une durée choisie et dont l'instant de départ TAL(R) sert à recaler la date d'expiration de la temporisation de calcul en cours à un instant choisi, si le temps écoulé est supérieur ou égal au seuil choisi (cas d'un TE-LSA dit « sporadique ») et/ou si les données représentatives de l'état du lien sont de type LSA, de manière à ordonner aux moyens de calcul, après expiration de ladite temporisation de calcul, de déterminer de nouvelles routes à partir des dernières instances des données reçues, représentatives des états des liens inter-routeurs et ayant été émises avant un instant précédent la date d'expiration de la temporisation de calcul en cours d'une durée au moins égale à un seuil dit « de synchronisation », puis de mettre à jour les tables de routage associées après expiration d'une temporisation dite de rafraîchissement.

Le routeur selon l'invention peut comporter d'autres caractéristiques qui peuvent être prises séparément ou en combinaison, et notamment :
- ses moyens de gestion peuvent être agencés pour gérer l'adjonction aux données, représentatives de l'état d'un lien et destinées à être transmises aux autres routeurs, d'un marquage temporel représentatif de leur date d'émission, ainsi qu'éventuellement d'un marquage temporel représentatif de la prochaine date d'expiration de ladite temporisation de calcul ;
   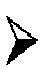 en cas de réception d'un LSA, les moyens de gestion peuvent être chargés de comparer la date de déclenchement de la temporisation de stabilisation en cours de leur routeur, stockée dans une mémoire, à la date d'émission dudit LSA, afin de recaler cette temporisation de stabilisation en cours sur la date d'émission dudit LSA, et donc la date d'expiration de la temporisation de calcul en cours de leur routeur, lorsque la date de déclenchement est postérieure à la date d'émission du LSA ;
      • les moyens de gestion peuvent être chargés de comparer la date de déclenchement de la temporisation de stabilisation en cours à la date d'émission d'un LSA lorsque celui-ci a été reçu pendant la temporisation de stabilisation en cours ;
- en présence d'un TE-LSA sporadique ou d'un LSA, ses moyens de gestion peuvent être chargés, à l'expiration de ladite temporisation de stabilisation, de déclencher une temporisation dite de synchronisation de durée égale au seuil de synchronisation choisi et expirant en même temps que la temporisation de calcul ;
- en cas d'instabilité durable ou nécessitant une réinitialisation générale au niveau d'un domaine de topologie géré, ses moyens de gestion peuvent être chargés d'ordonner la transmission aux autres routeurs du réseau d'un message de synchronisation de temporisation afin qu'ils utilisent la temporisation de calcul recalée de façon sensiblement synchronisée ;
   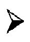 le message de synchronisation peut comprendre une information représentative de la prochaine date d'expiration de la temporisation de calcul ;
   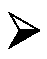 le message de synchronisation est par exemple de type « LSA opaque » (ou en anglais «opaque LSA») avec un numéro de protocole correspondant à un type dit DDTE (pour « Distributed Dynamic Traffic Engineering ») dans le champ d'identification.

L'invention propose également un procédé de mise à jour de données de routage distribué pour un réseau de communication à routage distribué comportant une multiplicité de routeurs.

Ce procédé se caractérise par le fait qu'il consiste, lorsqu'un routeur reçoit ou émet des données représentatives de l'état d'un lien, à un instant TAL(R) :
- à déterminer un temps écoulé depuis la réception ou l'émission de la dernière instance des données représentatives de l'état de ce lien, puis
- à comparer ce temps écoulé à un seuil choisi, et
- soit à attendre l'expiration d'une temporisation dite de calcul, en cours et de durée prédéfinie, si le temps écoulé est inférieur au seuil choisi et si les données représentatives de l'état du lien sont de type TE-LSA (cas d'un TE-LSA régulier), soit à déclencher une temporisation de stabilisation, d'une durée choisie et dont l'instant de départ TAL(R) sert à recaler la date d'expiration de la temporisation de calcul en cours à un instant choisi, si le temps écoulé est supérieur ou égal au seuil choisi (cas d'un TE-LSA sporadique) et/ou si les données représentatives de l'état du lien sont de type LSA, de manière à ordonner aux moyens de calcul, après expiration de la durée de temporisation de calcul, la détermination de nouvelles routes à partir des dernières instances des données reçues, représentatives des états des liens inter-routeurs et ayant été émises avant un instant précédent la date d'expiration de la temporisation de calcul en cours d'une durée au moins égale à un seuil de synchronisation, puis la mise à jour des tables de routage associées après expiration d'une temporisation dite de rafraîchissement.

L'invention est particulièrement bien adaptée aux réseaux de communication à protocole Internet (IP).

D'autres caractéristiques et avantages de l'invention apparaîtront à l'examen de la description détaillée ci-après, et des dessins annexés, sur lesquels :
- la figure 1 illustre de façon très schématique une partie d'un réseau de communication comportant sept routeurs selon l'invention, raccordés les uns aux autres,
- la figure 2 illustre de façon très schématique et fonctionnelle un routeur selon l'invention,
- la figure 3 est un chronogramme illustrant de façon schématique le mécanisme de mise à jour des tables de routage au sein d'un routeur selon l'invention, en présence de TE-LSAs de type régulier,
- la figure 4 est un chronogramme illustrant de façon schématique le mécanisme de mise à jour des tables de routage au sein d'un routeur selon l'invention, en présence de TE-LSAs de type sporadique ou de LSAs,
- la figure 5 est un chronogramme illustrant de façon schématique les mécanismes de synchronisation des bases de données et de mise à jour des tables de routage de quatre routeurs selon l'invention, en présence de TE-LSAs de type sporadique ou de LSAs.

Les dessins annexés pourront non seulement servir à compléter l'invention, mais aussi contribuer à sa définition, le cas échéant.

L'invention concerne les réseaux de communication mettant en oeuvre un protocole de routage distribué supportant une gestion de trafic de type TE-LSA (pour « Trafic Engineering - Link State Advertisement »), comme par exemple le protocole de routage d'état de liaison OSPF-TE (pour « Open Shortest Path First - Trafic Engineering ») ou le protocole IS-IS-TE (pour « Intermediate System - Intermediate System - Trafic Engineering »).

Dans ce qui suit, on considère à titre d'exemple non limitatif que le réseau de communication est un réseau à protocole Internet (IP).

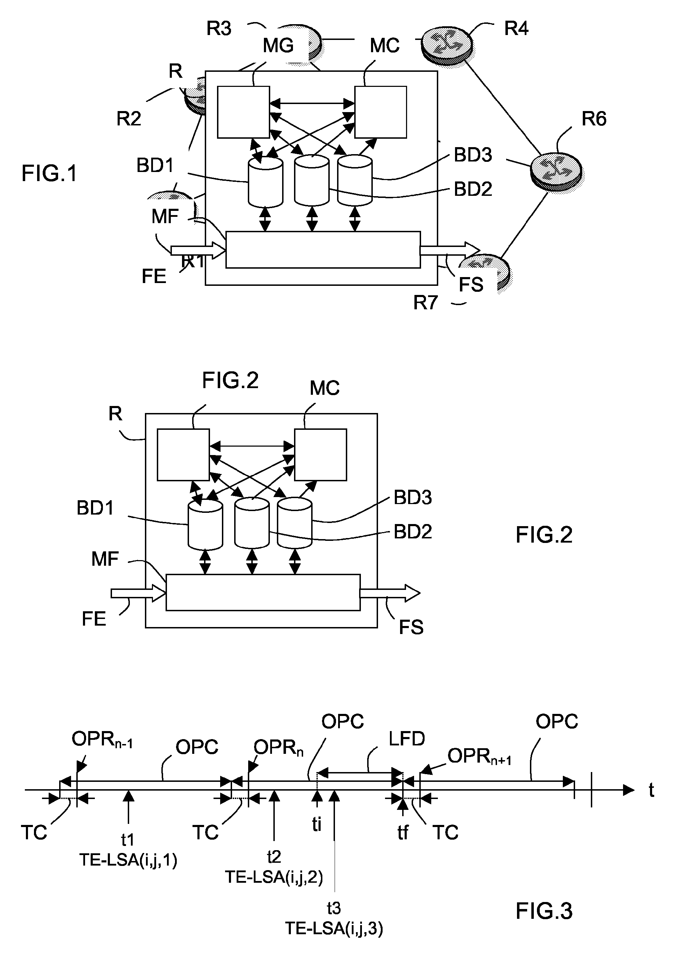

Comme cela est schématiquement illustré sur la figure 1, un réseau IP comporte généralement une multiplicité de routeurs ou noeuds Ri (ici i = 1 à 7, mais il peut prendre n'importe quelle valeur supérieure ou égale à 2), raccordés les uns aux autres par des liens, et à certains desquels peuvent être connectés des sous-réseaux locaux de terminaux de communication ou d'entreprises (non représentés), ou parfois des terminaux isolés.

Les routeurs (ou noeuds) Ri du réseau IP sont tous capables d'échanger entre eux des annonces d'état de lien comportant des données représentatives de la disponibilité d'un lien, agencées sous la forme de LSAs (pour « Link State Advertisement »), ou des données représentatives de l'occupation d'un lien, agencées sous la forme de TE-LSAs (« Traffic Engineering - LSAs »), comme par exemple la bande passante utilisée ou disponible.

Comme cela est schématiquement et fonctionnellement illustré sur la figure 2, chaque routeur R comprend, tout d'abord, un module de routage (également appelé module de calcul de routes) MC et un module de transmission (ou « forwarding ») MF couplé à ses interfaces (non représentées).

Il comprend également des moyens de stockage BD1 qui sont généralement agencés sous la forme de deux bases de données de routage éventuellement séparées, appelées base d'informations de routage (ou RIB pour « Routing Information Base ») et base d'informations de transmission (ou FIB pour « Forwarding Information Base »).

La base d'informations de routage stocke des données (ou informations) de routage permettant de router des datagrammes IP (ou paquets de données) vers un routeur suivant. Comme on le verra plus loin, ces données de routage sont déterminées (ou calculées) par le module de routage MC à partir des données contenues dans les LSAs ou TE-LSAs qui sont reçus par les interfaces d'entrée du routeur R (flèche FE) et qui proviennent des autres routeurs du réseau conformément au mécanisme DEP (pour « Database Exchange Process »). Les données des LSAs et les données des TE-LSAs sont généralement stockées dans deux autres bases de données BD2 et BD3.

Le module de gestion MG est également chargé de gérer l'émission, via les interfaces de sortie, des LSAs ou TE-LSAs destinés aux autres routeurs LSA du réseau conformément au mécanisme DEP (flèche FS). La gestion concerne aussi bien les décisions d'envoi des **TE-LSAs** que l'insertion dans les LSAs et TE-LSAs à émettre d'un marquage temporel (ou « time stamping ») représentatif de leur date d'émission.

Le module de routage MC est chargé de calculer les routes au moins à partir des données contenues dans la base de données de LSAs BD2 et la base de données de TE-LSAs BD3.

La base d'informations de transmission (FIB) stocke des données (ou informations) de routage permettant au module de transmission MF de router les datagrammes IP (ou paquets de données) vers un routeur suivant. Ces données sont essentiellement représentatives d'informations de (re)transmission extraites de la base d'informations de routage.

Les données (ou informations) de routage, stockées dans les moyens de stockage BD1, constituent ce que l'on appelle habituellement les tables de routage du routeur R.

Comme évoqué précédemment, le module de routage (ou de calcul de routes) MC est chargé de déterminer des routes à partir des données qui sont stockées dans les moyens de stockage, essentiellement BD2 et BD3. Il est également chargé de mettre à jour les tables de routage distribué stockées dans les moyens de stockage BD1 en fonction des routes qu'il détermine.

Le calcul des routes peut se faire au moyen de n'importe quel algorithme connu de l'homme de l'art, et en particulier au moyen de l'algorithme de routage multi-critères adaptatif, avec ou sans contrainte(s) (locale(s) et/ou globale(s)), appelé RMC (pour « Routing with Multiple Criteria »), qui est notamment décrit dans le document brevet FR 2843263 dont le contenu technique est ici incorporé par référence.

Selon les variantes, le module de routage MC est adapté soit au routage de type « best effort », soit au routage de type « QoS » (pour « Quality of Service »). Il est rappelé que le routage de type best effort est un routage de base qui se caractérise par la prise en compte de critères en l'absence de contraintes, tandis que le routage de type QoS se caractérise par la prise en compte de critères en présence de contraintes locales et/ou globales.

L'invention porte plus particulièrement sur la mise à jour et la synchronisation des tables de routage, et donc des moyens de stockage BD1 à BD3, des routeurs Ri du réseau, de manière à éviter la déviation de trafic et/ou la formation de boucles de routage, autant que faire se peut.

Elle propose à cet effet d'équiper les routeurs Ri du réseau d'un module de gestion MG qui va être décrit ci-après.

Le module de gestion MG est chargé d'intervenir chaque fois que le routeur R dans lequel il est implanté reçoit ou émet des données représentatives de l'état d'un lien sous la forme d'une instance de TE-LSA ou de LSA, à un instant TAL(R). Il est rappelé qu'un TE-LSA ou un LSA concerne un lien (i,j) entre deux routeurs Ri et Rj, et qu'une instance de TE-LSA ou de LSA est référencée par un indice (ou identifiant) k qui représente son numéro d'émission depuis la création du lien (i,j) ainsi que sa date d'émission. En d'autres termes, une instance de TE-LSA ou de LSA est caractérisée par un triplet (i,j,k) et l'instance d'un TE-LSA (i,j,k+1) constitue la mise à jour de l'instance du TE-LSA (i,j,k) précédent.

Le module de gestion MG est averti de la réception ou de l'émission d'une instance de TE-LSA ou de LSA au sein de son routeur R par le module de transmission MF qui la reçoit.

Une fois que le module de gestion MG est averti de la réception ou de l'émission d'une instance de TE-LSA ou de LSA (i,j,k) à l'instant TAL(R), il détermine le temps T_e qui s'est écoulé entre cet instant TAL(R) et l'instant de réception ou d'émission de la dernière instance de ce TE-LSA ou LSA (i,j,k-1).

Puis, il compare ce temps écoulé T_e à un seuil choisi SHT, qui est par exemple égal à l'intervalle temporel « spfHoldTime » entre deux calculs de chemin (ou route) optimal(e) dans l'art antérieur que multiplie une valeur k (avec k = 1, par exemple), soit SHT = k* spfHoldTime. Par exemple le seuil SHT peut être égal à 10 secondes.

La suite du traitement effectué par le module de gestion MG dépend du résultat de la comparaison. Deux cas doivent être envisagés.

Le premier cas est illustré sur la figure 3. Il correspond à un temps écoulé T_e inférieur au seuil choisi SHT et à des données, représentatives de l'état du lien, de type TE-LSA. On parle alors de TE-LSA « régulier ».

Dans ce premier cas, le module de gestion MG attend l'expiration (tf) d'une temporisation dite de calcul OPC, qui est en cours et dont la durée est prédéfinie (ou fixe), pour déclencher une temporisation dite de rafraîchissement TC, également de durée prédéfinie (ou fixe) et qui correspond au temps dont dispose le module de routage MC pour calculer de nouvelles routes.

Par définition, dans ce premier cas la temporisation de calcul OPC présente une durée égale à l'intervalle temporel [OPRₙ₋₁ ;OPRₙ] entre deux mises à jour successives de la table de routage stockée dans les moyens de stockage BD1 du routeur R. Mais, chaque temporisation de calcul OPC débute à l'instant (tf) du déclenchement de la temporisation de rafraîchissement TC (pendant laquelle le module de routage MC calcule les nouvelles routes) et se termine à l'instant (tf + OPC) du déclenchement de la temporisation de rafraîchissement TC suivante. Par ailleurs, chaque instant de mise à jour OPRₙ est synchronisé sur l'expiration de la temporisation de rafraîchissement TC.

Il est important de noter que cette temporisation de calcul OPC n'est pas déclenchée par un événement tel que la réception ou l'émission d'un TE-LSA régulier. Elle est en effet déclenchée automatiquement de façon périodique et c'est l'intervention du module de gestion MG qui est déclenchée par un événement tel que la réception ou l'émission d'un TE-LSA régulier.

Le module de gestion MG intervient également à l'expiration tf de chaque temporisation de calcul OPC pour sélectionner parmi les TE-LSAs et les LSAs reçus ceux qui ont été émis au moins tf - ti secondes avant. La durée de chaque intervalle de temps tf - ti est égale à un seuil dit « de synchronisation » référencé LFD.

La durée du seuil LFD est choisie en fonction de l'agencement du réseau. Plus précisément, elle est choisie de manière à maximiser la probabilité que tous les routeurs Ri du réseau aient reçu la dernière instance de TE-LSA ou LSA relative à chaque lien (i,j) dudit réseau. Elle est par exemple égale à environ 5 secondes. Par conséquent, chaque fois que la temporisation de calcul OPC expire (instant tf) le module de routage MC utilise les dernières instances de LSA et TE-LSA émises au moins LFD secondes avant.

Dans l'exemple illustré sur la figure 3, on peut observer qu'une première instance de TE-LSA (i,j,1) est reçue par le routeur R avant la dernière mise à jour (OPRₙ) de ses tables de routage, qu'une deuxième instance de TE-LSA (i,j,2) est reçue par le routeur R après la dernière mise à jour (OPRₙ) des tables de routage, mais avant l'instant ti, et qu'une troisième instance de TE-LSA (i,j,3) est reçue par le routeur R pendant la temporisation de synchronisation LFD. Par conséquent, si le TE-LSA (i,j,3) a été émis avant ti (et donc qu'il est plus ancien que LFD) alors il est pris en compte, sinon c'est le TE-LSA (i,j,2) qui est pris en compte.

A la fin de la temporisation de rafraîchissement TC, le module de gestion MG ordonne au module de routage MC de mettre à jour les tables de routage associées, compte tenu des nouvelles routes qu'il a calculées.

Il est important de noter que dans le premier cas (qui concerne les TE-LSAs réguliers) les instants de déclenchement et d'expiration des temporisations OPC et LFD, utilisées dans les différents routeurs Ri du réseau, sont prédéfinis. Par conséquent, la synchronisation des mises à jour (OPR) des tables de routage stockées dans les moyens de stockage BD1 des différents routeurs Ri du réseau est automatique dès lors que les horloges internes desdits routeurs Ri sont synchronisées via des protocoles standards, tels que NTP (pour « Network Time Protocol » ou SNTP pour « Simple NTP »).

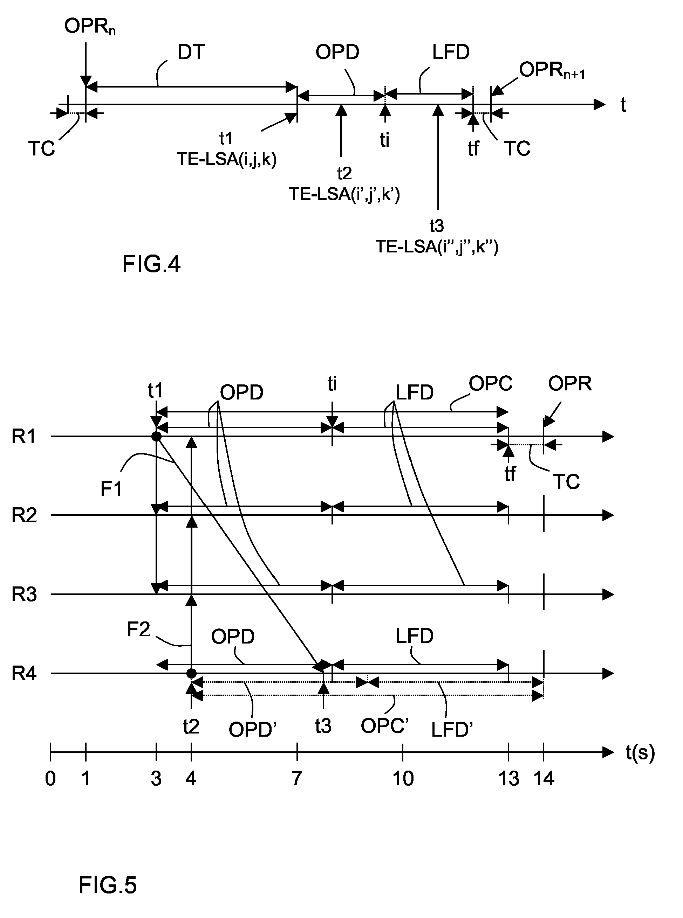

Le second cas est illustré sur les figures 4 et 5. Il correspond à un temps écoulé T_e supérieur ou égal au seuil choisi SHT et/ou à des données, représentatives de l'état du lien, de type LSA. Lorsque les données sont agencées sous la forme d'un TE-LSA et que le temps écoulé T_e est supérieur ou égal au seuil choisi SHT, le TE-LSA est dit « sporadique ». D'une manière générale tout LSA ou TE-LSA contenant une information reflétant un état de lien alarmant est ici classé comme sporadique.

Dans ce second cas, le module de gestion MG attend également l'expiration (tf) d'une temporisation de calcul OPC pour déclencher la temporisation de rafraîchissement TC (présentée ci-avant). Mais, contrairement au premier cas (relatif aux TE-LSAs réguliers) dans lequel la temporisation de calcul OPC était déclenchée à des instants prédéfinis et dont la durée était fixée, dans le second cas l'expiration de la temporisation de calcul OPC peut être recalée lorsque certains événements surviennent. Plus précisément, dans ce second cas la date d'expiration de la temporisation de calcul OPC est recalée par un module de gestion MG lorsque son routeur R a reçu ou à émis un TE-LSA sporadique ou un LSA et que la date d'émission de ce dernier satisfait à une condition temporelle sur laquelle on reviendra plus loin.

Chaque fois que le module de gestion MG est averti de l'émission ou de la réception d'un premier TE-LSA sporadique ou d'un premier LSA (d'une cascade de LSAs ou TE-LSAs), il déclenche immédiatement une temporisation dite de stabilisation OPD d'une durée choisie et à partir de laquelle est fixée la nouvelle date d'expiration (tf) de la temporisation de calcul OPC. On entend ici par « premier » le LSA ou TE-LSA sporadique qui possède la date d'émission la plus ancienne.

La durée de la temporisation de stabilisation OPD est choisie de manière à permettre la stabilisation des états de tous les liens (i,j) du réseau lorsqu'un événement a affecté l'état de l'un desdits liens (i,j) du réseau. Elle est typiquement de l'ordre d'environ 5 secondes. Il est important de noter qu'elle peut éventuellement être modifiée pour tout le réseau si le besoin s'en fait sentir.

Il est important de noter que la plupart des implantations du protocole OSPF obligent un routeur qui vient de recevoir un LSA à attendre pendant une durée appelée « spdelay », à compter de sa date de réception, avant de mettre à jour ses bases de données de routage, tandis que selon l'invention, lorsqu'un routeur R reçoit ou émet à un instant TAL(R) un LSA ou TE-LSA sporadique il cale provisoirement le début d'une temporisation de stabilisation OPD sur la date de réception ou d'émission TAL(R), le calage définitif de la temporisation de stabilisation OPD se faisant ensuite par rapport à la date d'émission la plus ancienne des LSAs ou TE-LSAs reçus par ledit routeur R pendant la durée de sa temporisation de stabilisation OPD.

La date d'expiration (tf) de la temporisation de calcul OPC est déterminée en rajoutant à la durée de la temporisation de stabilisation OPD définitive (qui expire à l'instant ti) une durée égale à un seuil de synchronisation LFD. Ce dernier peut également être considéré comme une temporisation de synchronisation LFD dont le début ti coïncide avec la fin de la temporisation de stabilisation OPD définitive, dont la fin tf coïncide avec la date d'expiration de la temporisation de calcul OPC et dont la durée est prédéfinie (ou fixée).

La durée du seuil de synchronisation LFD est choisie en fonction de l'agencement du réseau. Plus précisément, elle est choisie de manière à maximiser la probabilité que tous les routeurs Ri du réseau aient reçu la dernière instance de TE-LSA ou LSA relative à chaque lien (i,j) dudit réseau. Elle est par exemple égale à environ 5 secondes.

A l'expiration (tf) de la durée de synchronisation LFD, et donc de la temporisation de calcul OPC, le module de gestion MG déclenche la temporisation de rafraîchissement TC et ordonne au module de routage MC, sensiblement en même temps, de calculer de nouvelles routes à partir des dernières instances reçues des TE-LSAs ou LSAs relatifs à chaque lien (i,j) du réseau et qui ont été émises avant l'instant ti représentant le début de la durée de synchronisation LFD.

Dans cet exemple de mise en oeuvre (non limitatif), pour déterminer les instances reçues des TE-LSAs sporadiques ou des LSAs qui doivent être prises en compte par le module de routage MC, le module de gestion MG utilise la durée de synchronisation LFD qu'il déclenche à l'instant ti qui marque la fin de la temporisation de stabilisation OPD et qui expire en même temps que la temporisation de calcul OPC. Ainsi, on considère comme dernière instance d'un TE-LSA ou LSA l'instance émise avant l'instant ti marquant la fin de la temporisation de stabilisation OPD (et le début de la durée de synchronisation LFD).

Dans l'exemple illustré sur la figure 4, on peut observer :
- qu'un premier TE-LSA sporadique (i,j,k) est reçu par le routeur R à l'instant t1 qui est séparé temporellement de la dernière mise à jour (OPRₙ) de sa table de routage (BD1) d'une durée DT supérieure au seuil SHT et qui constitue le début de la temporisation de stabilisation OPD,
- qu'un deuxième TE-LSA (i',j',k') est reçu par le routeur R à l'instant t2 survenant pendant la temporisation de stabilisation OPD, et
- qu'un troisième TE-LSA (i",j",k") est reçu par le routeur R pendant la durée de synchronisation LFD.

Dans cet exemple, les **TE-LSA** (i,j,k) et **TE-LSA** (i',j',k') sont pris en compte, tandis que le TE-LSA (i",j",k") n'est pris en compte que s'il a été émis avant le début de la durée de synchronisation LFD.

A la fin de la temporisation de rafraîchissement TC, le module de gestion MG ordonne au module de routage MC de mettre à jour la table de routage associée stockée dans les moyens de stockage BD1 compte tenu des nouvelles routes qu'il a calculées.

Dans ce second cas (qui concerne les LSAs et les TE-LSAs sporadiques), on ne connaît pas l'instant de déclenchement de la temporisation de stabilisation OPD utilisée dans les différents routeurs Ri du réseau. Une synchronisation des mises à jour la table de routage associée stockée dans les moyens de stockage BD1 des différents routeurs Ri du réseau est effectuée automatiquement. Comme indiqué précédemment, le début de la temporisation de stabilisation OPD correspond à la plus ancienne date d'émission t* des LSAs et les TE-LSAs sporadiques reçus ou émis entre l'instant t1 de déclenchement de la temporisation de stabilisation OPD et l'instant ti (= t1 + OPD) d'expiration de cette temporisation de stabilisation OPD. La date d'expiration ti de la temporisation de calcul OPC suivante, commune à tous les routeurs du domaine de topologie concerné, est alors égale à t* + OPD + LFD.

Pour effectuer cette synchronisation en cas d'instabilité durable ou nécessitant une réinitialisation générale au niveau d'un domaine de topologie géré, il est avantageux que le module de gestion MG, qui a déclenché une temporisation de stabilisation OPD consécutivement à la réception ou à l'émission d'un TE-LSA sporadique ou d'un LSA, génère à destination des autres routeurs de son domaine de topologie un message de synchronisation de temporisation MS.

Ce message de synchronisation de temporisation MS est destiné à permettre aux autres routeurs d'un domaine de topologie de synchroniser leurs temporisations de calcul OPC sur celle qui a été déclenchée par le module de gestion MG du routeur R qui leur a transmis ledit message MS, afin qu'ils puissent mettre à jour leur tables de routage respectives de façon sensiblement synchronisée.

Afin de permettre la synchronisation, chaque message de synchronisation MS comprend, par exemple, une information représentative de l'instant de déclenchement de la temporisation de calcul OPC, commune à tous les routeurs du domaine de topologie. Chaque message de synchronisation MS peut également comprendre des données représentatives de la durée choisie de la temporisation de stabilisation OPD, ou d'autres variables telles que TC ou LFD, notamment si celles-ci sont variables dans le temps, ou représentatives du début de la prochaine mesure d'occupation des liens.

Les messages de synchronisation MS peuvent être par exemple des LSAs de type opaque. Ils peuvent par exemple comporter dans leur champ d'identification un champ de type opaque (typiquement égal à 1 pour les TE-LSAs) et un champ identifiant et représentant leur type spécifique, par exemple DDTE (pour « Distributed Dynamic Traffic Engineering »). Ces LSAs opaques sont dits de type 10 car ils concernent leur domaine de topologie.

Connaissant l'instant de déclenchement de la temporisation de stabilisation OPD, le module de gestion MG en déduit l'instant tf auquel doit expirer la temporisation de calcul OPC. Lorsque le message de synchronisation MS contient des données représentatives de l'instant tf d'expiration de la temporisation de calcul OPC (ou de l'instant OPR de mise à jour de la table de routage stockée dans les moyens de stockage BD1), le module de gestion MG n'a pas de déduction à faire. Il extrait directement du message l'instant d'expiration tf ou l'instant de mise à jour OPR.

A la fin de la temporisation de calcul OPC le module de gestion MG déclenche la temporisation de rafraîchissement TC. Sensiblement en même temps qu'il déclenche la temporisation de rafraîchissement TC, le module de gestion MG ordonne au module de routage MC de calculer de nouvelles routes à partir des dernières instances reçues des TE-LSAs ou LSAs relatifs à chaque lien (i,j) du réseau, et dont la date d'émission est antérieure à la date d'expiration tf de la temporisation de calcul OPC moins la durée de synchronisation LFD. Puis, à la fin de la temporisation de rafraîchissement TC, le module de gestion MG ordonne au module de routage MC de mettre à jour la table de routage stockée dans les moyens de stockage BD1, compte tenu des nouvelles routes qu'il a calculées.

Dans le second cas (qui concerne les LSAs et les TE-LSAs sporadiques), il peut arriver qu'un routeur déclenche une temporisation de stabilisation OPD juste après qu'un autre routeur ait déclenché une temporisation de calcul OPC. Une telle situation est illustrée sur la figure 5.

Dans cet exemple illustré, le routeur R1 a émis à l'instant t1 = 3 secondes, à destination des routeurs R2 à R4, un TE-LSA sporadique ou un LSA afin de leur signaler une modification d'état de lien, et le routeur R4 a émis à l'instant t1 = 4 secondes, à destination des routeurs R1 à R3, un TE-LSA sporadique ou un LSA afin de leur signaler une modification d'état de lien.

Lorsque le routeur R1 avertit son module de gestion MG qu'il a émis à l'instant t1 = 3 secondes un TE-LSA sporadique ou un LSA, ledit module de gestion MG déclenche à cet instant t1 sa temporisation de stabilisation OPD. A l'expiration de la durée de la temporisation de stabilisation OPD (instant ti = 8 secondes) le module de gestion MG du routeur R1 prend en compte la durée de synchronisation LFD, qui expire ici à l'instant tf = 13 secondes, pour définir tf comme date d'expiration de sa temporisation de calcul OPC.

Dans cet exemple, seuls les routeurs R2 et R3 reçoivent le TE-LSA sporadique (ou le LSA) émis par le routeur R1 quelques millisecondes après t1= 3 secondes, ce qui constitue pour chacun d'eux un événement déclencheur de leur temporisation de stabilisation OPD.

Lorsque le routeur R4 avertit son module de gestion MG qu'il a émis à l'instant t2 = 4 secondes un TE-LSA sporadique ou un LSA, il déclenche à cet instant t2 sa temporisation de stabilisation OPD' provisoire. A l'expiration de la durée de sa temporisation de stabilisation OPD' (instant ti' = 9 secondes) le module de gestion MG du routeur R4 devrait prendre en compte la durée de synchronisation LFD, qui devrait prendre fin à l'instant tf = 14 secondes, pour définir tf comme date d'expiration de sa temporisation de calcul OPC'.

Or, deux temporisations de stabilisation OPD et OPD', décalées de 1 seconde, coexistent.

Dans cet exemple, les routeurs R1 à R3 ont déclenché leurs temporisations de stabilisation OPD respectives sensiblement en même temps (t1 = 3 secondes). Or, pendant la durée de leur temporisation de stabilisation OPD ils ne reçoivent que le TE-LSA sporadique (ou LSA) émis par le routeur R4 à l'instant t2 = 4 secondes. L'instant t2 étant postérieur à l'instant t1 de déclenchement de leurs temporisations de stabilisation OPD, ces dernières sont donc synchronisées et définitives. Les routeurs R1 à R3 peuvent alors déterminer la date d'expiration tf de leur temporisation de calcul OPC commune (ici tf = 13 secondes), et donc la date (OPR = tf + TC) à laquelle ils pourront mettre à jour leurs tables de routage stockées dans leurs moyens de stockage BD1 (OPR = 14 secondes lorsque la phase de calcul de routes TC dure 1 seconde).

Le routeur R4 ne reçoit le TE-LSA sporadique (ou le LSA) émis par le routeur R1 qu'aux environs de l'instant t3 = 7,5 secondes, après une ou deux ré-émissions (flèche F1). Lorsque son module de gestion MG est averti de la réception par son routeur R4 de ce TE-LSA sporadique (ou LSA), il compare sa date d'émission (ici t1 = 3 secondes) à la date de déclenchement de sa temporisation de stabilisation OPD' (ici t2 = 4 secondes). L'instant t2 étant postérieur à l'instant t1 et le routeur R4 n'ayant pas reçu d'autre LSA ou TE-LSA sporadique pendant la durée de sa temporisation de stabilisation OPD', le module de gestion MG du routeur R4 en déduit immédiatement qu'il doit recaler le début de sa temporisation de stabilisation OPD' sur l'instant t1 qui est le début de la temporisation de stabilisation OPD commune aux routeurs de son domaine de topologie. Ce recalage de la temporisation de stabilisation du routeur R4 provoque le recalage de la date d'expiration de sa temporisation de calcul OPC en cours. Tous les routeurs R1 à R4 du domaine de topologie sont alors synchronisés de manière automatique.

Ce type de synchronisation des routeurs appartenant à un même domaine de topologie sur une temporisation de stabilisation OPD commune et une temporisation de calcul OPC commune permet d'éviter que des resynchronisations explicites permanentes et très rapprochées dans le temps se produisent, lesquelles pourraient empêcher certaines mises à jour de tables de routage (BD1).

Que l'on soit dans le premier ou dans le second cas, en cas de forte perturbation du réseau, correspondant à une indisponibilité suffisamment étendue et/ou suffisamment longue se traduisant par une absence de réception de TE-LSA et de LSA, il est avantageux de prévoir la réinitialisation des temporisations de tous les routeurs Ri du réseau, précédemment décrite.

Le module de gestion MG et le module de routage MC d'un routeur R selon l'invention peuvent être réalisés sous la forme de circuits électroniques, de modules logiciels (ou informatiques), ou d'une combinaison de circuits et de logiciels.

L'invention ne se limite pas aux modes de réalisation de routeur décrits ci-avant, seulement à titre d'exemple, mais elle englobe toutes les variantes que pourra envisager l'homme de l'art dans le cadre des revendications ci-après.

## Revendications

1. Routeur (R) pour un réseau de communication à routage distribué, ledit routeur comprenant une base de données (BD1-BD3), contenant des données représentatives des états des liens entre routeurs dudit réseau, et des moyens de calcul (MC) propres à déterminer des routes à partir desdites données et à mettre à jour des tables de routage distribué en fonction desdites routes déterminées, **caractérisé en ce qu'**il comprend des moyens de gestion (MG) agencés, en cas de réception ou d'émission locale à un instant TAL(R) de données représentatives de l'état d'un lien, pour déterminer un temps écoulé (T_e) depuis la réception ou l'émission de la dernière instance des données représentatives de l'état dudit lien, puis pour comparer ce temps écoulé (T_e) à un seuil choisi (SHT), et soit pour attendre l'expiration d'une temporisation dite de calcul (OPC), en cours et de durée prédéfinie, si ledit temps écoulé (T_e) est inférieur audit seuil choisi (SHT) et si lesdites données représentatives de l'état dudit lien sont de type TE-LSA, soit pour déclencher une temporisation dite de stabilisation (OPD), d'une durée choisie et dont l'instant de départ TAL(R) sert à recaler la date d'expiration de ladite temporisation de calcul en cours (OPC) à un instant choisi, si ledit temps écoulé (T_e) est supérieur ou égal au seuil choisi (SHT) et/ou si lesdites données représentatives de l'état dudit lien sont de type LSA, de manière à ordonner auxdits moyens de calcul (MC), après expiration de ladite temporisation de calcul (OPC), de déterminer de nouvelles routes à partir des dernières instances des données reçues, représentatives des états des liens inter-routeurs et ayant été émises avant un instant précédent ladite date d'expiration de la temporisation de calcul en cours (OPC) d'une durée au moins égale à un seuil dit « de synchronisation » (LFD), puis de mettre à jour les tables de routage associées après expiration d'une temporisation dite de rafraîchissement (TC).

2. Routeur selon la revendication 1, **caractérisé en ce qu'**en présence d'un temps écoulé supérieur ou égal audit seuil choisi (SHT) et/ou de données représentatives de l'état d'un lien de type LSA, lesdits moyens de gestion (MG) sont agencés pour gérer l'adjonction aux données, représentatives de l'état d'un lien et destinées à être transmises aux autres routeurs, d'un marquage temporel représentatif de leur date d'émission.

3. Routeur selon la revendication 2, **caractérisé en ce que** lesdits moyens de gestion (MG) sont agencés pour gérer l'adjonction aux données, représentatives de l'état d'un lien et destinées à être transmises aux autres routeurs, d'un marquage temporel représentatif de la prochaine date d'expiration de ladite temporisation de calcul (OPC).

4. Routeur selon l'une des revendications 2 et 3, **caractérisé en ce qu'**en cas de réception d'un LSA, lesdits moyens de gestion (MG) sont agencés pour comparer la date de déclenchement de leur temporisation de stabilisation en cours (OPD), stockée dans une mémoire, à la date d'émission dudit LSA, afin de recaler leur temporisation de stabilisation en cours (OPD) sur la date d'émission dudit LSA, et donc la date d'expiration de leur temporisation de calcul en cours (OPC), lorsque ladite date de déclenchement est postérieure à la date d'émission dudit LSA.

5. Routeur selon la revendication 4, **caractérisé en ce que** lesdits moyens de gestion (MG) sont agencés pour comparer ladite date de déclenchement de leur temporisation de stabilisation en cours (OPD) à ladite date d'émission d'un LSA lorsque ce dernier a été reçu pendant leur temporisation de stabilisation en cours (OPD).

6. Routeur selon l'une des revendications 1 à 5, **caractérisé en ce qu'**en présence d'un temps écoulé supérieur ou égal audit seuil choisi (SHT) et/ou de données représentatives de l'état d'un lien de type LSA, lesdits moyens de gestion (MG) sont agencés, à l'expiration de ladite temporisation de stabilisation (OPD), pour déclencher une temporisation dite de synchronisation (LFD) de durée égale audit seuil de synchronisation choisi (LFD) et expirant en même temps que ladite temporisation de calcul (OPC).

7. Routeur selon l'une des revendications 1 à 6, **caractérisé en ce qu'**en cas d'instabilité durable ou nécessitant une réinitialisation générale au niveau d'un domaine de topologie géré lesdits moyens de gestion (MG) sont agencés pour ordonner la transmission aux autres routeurs du réseau d'un message de synchronisation de temporisation afin qu'ils utilisent la temporisation de calcul (OPC) recalée de façon sensiblement synchronisée.

8. Routeur selon la revendication 7, **caractérisé en ce que** ledit message de synchronisation comprend une information représentative de la prochaine date d'expiration de ladite temporisation de calcul (OPC).

9. Routeur selon l'une des revendications 7 et 8, **caractérisé en ce que** ledit message de synchronisation est un LSA de type opaque comportant un numéro de protocole correspondant à un type dit DDTE dans un champ d'identification.

10. Routeur selon l'une des revendications 1 à 9, **caractérisé en ce que** lesdits moyens de gestion (MG) sont agencés, en cas d'absence de réception de données représentatives de l'état d'un lien pendant une durée supérieure à un seuil d'indisponibilité choisi, pour générer, à destination des autres routeurs dudit réseau, un message de réinitialisation comportant des données représentatives de la date de déclenchement de la prochaine temporisation de calcul (OPC) à déclencher, de sorte qu'ils utilisent ladite temporisation de calcul (OPC) de façon sensiblement synchronisée.

11. Procédé de mise à jour de données de routage distribué pour un réseau de communication à routage distribué comportant une multiplicité de routeurs (R) comprenant chacun une base de données (BD1-BD3), contenant des données représentatives des états des liens inter-routeurs, et des moyens de calcul (MC) propres à déterminer des routes à partir desdites données et à mettre à jour des tables de routage en fonction desdites routes déterminées,
**caractérisé en ce qu'**il consiste, lorsqu'un routeur (R) reçoit ou émet des données représentatives de l'état d'un lien, à un instant TAL(R) :
- à déterminer un temps écoulé (T_e) depuis la réception ou l'émission de la dernière instance des données représentatives de l'état dudit lien, puis
- à comparer ce temps écoulé à un seuil choisi (SHT), et
- soit à attendre l'expiration d'une temporisation dite de calcul (OPC), en cours et de durée prédéfinie, si ledit temps écoulé (T_e) est inférieur audit seuil choisi et si lesdites données représentatives de l'état dudit lien sont de type TE-LSA, soit à déclencher une temporisation dite de stabilisation (OPD), d'une durée choisie et dont l'instant de départ TAL(R) sert à recaler la date d'expiration de ladite temporisation de calcul en cours (OPC) à un instant choisi, si ledit temps écoulé (T_e) est supérieur ou égal audit seuil choisi (SHT) et/ou si lesdites données représentatives de l'état dudit lien sont de type LSA, de manière à ordonner auxdits moyens de calcul (MC), après expiration de la durée de temporisation de calcul (OPC), la détermination de nouvelles routes à partir des dernières instances des données reçues, représentatives des états des liens inter-routeurs et ayant été émises avant un instant précédent ladite date d'expiration de la temporisation de calcul en cours (OPC) d'une durée au moins égale à un seuil dit «de synchronisation » (LFD), puis la mise à jour des tables de routage associées après expiration d'une temporisation dite de rafraîchissement (TC).
